# Europäisches Patentamt

# European Patent Office

# Office européen des brevets

(19)

(11) Veröffentlichungsnummer: **0 248 899**

**B1**

(12)

# EUROPÄISCHE PATENTSCHRIFT

(45) Veröffentlichungstag der Patentschrift:
04.10.89

(51) Int. Cl.⁴: **F 16 H 3/08**

(21) Anmeldenummer: **87901261.5**

(22) Anmeldetag: **26.11.86**

(86) Internationale Anmeldenummer:
**PCT/EP 86/00684**

(87) Internationale Veröffentlichungsnummer:
**WO 87/03661 (18.06.87 Gazette 87/13)**

---

(54) **STUFENSCHALTGETRIEBE.**

---

(30) Priorität: **06.12.85 DE 3543269**

(43) Veröffentlichungstag der Anmeldung:
**16.12.87 Patentblatt 87/51**

(45) Bekanntmachung des Hinweises auf die Patenterteilung:
**04.10.89 Patentblatt 89/40**

(84) Benannte Vertragsstaaten:
**AT BE CH DE FR GB IT LI NL SE**

(56) Entgegenhaltungen:
**DE-A-2 535 700**
**GB-A-2 047 360**
**GB-A-2 079 877**
**US-A-3 451 285**

(73) Patentinhaber: **J.M. Voith GmbH, Sankt Pöltener Strasse 43, D-7920 Heidenheim (DE)**

(72) Erfinder: **STODT, Enno, Waiblinger Weg 8, D-7920 Heidenheim (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

EP 0 248 899 B1

# Beschreibung

## Stufenschaltgetriebe

Die Erfindung betrifft ein Stufenschaltgetriebe für drei Vorwärtsgänge und einen Rückwärtsgang, wie es im Oberbegriff des Anspruchs 1 vorausgesetzt und aus der AT-PS-51 824 bekannt ist.

Danach geht die Erfindung aus von einem Schaltgetriebe, das eine Antriebswelle und eine mit dieser koppelbare, koaxial angeordnete Abtriebswelle sowie mehrere Nebenwellen aufweist. Auf den genannten Wellen sind mehrere Gruppen von miteinander kämmenden Zahnrädern angeordnet. Zum Schalten der Gänge dienen verschiebbare Schaltmuffen, die als formschlüssige Kupplungen ausgebildet sind. Eine der Schaltmuffen dient zum direkten Koppeln der Abtriebswelle an die Antriebswelle. Mit jeder der anderen Schaltmuffen kann ein bestimmtes, lose auf einer der Wellen sitzendes Zahnrad an diese Welle gekoppelt werden, so daß jeweils nur diejenigen Zahnradpaare wirksam sind, welche mit ihrem Durchmesser (und entsprechender Zähnezahl) die jeweils gewünschte Übersetzung herstellen.

Das bekannte Stufenschaltgetriebe hat außer den zueinander koaxial angeordneten An- und Abtriebswellen drei Nebenwellen; die Zahnräder sind in vier Zahnradgruppen unterteilt; es sind somit vier Radebenen vorhanden, nämlich zwei vordere und zwei hintere Radebenen. Die Schaltmuffen sind alle im mittleren Bereich des Getriebes angeordnet, also im wesentlichen in einer sogenannten Muffenebene, die zwischen der zweiten und der dritten Radebene liegt. Mit dieser bekannten Konstruktion ist schon versucht worden, eine raumsparende Konstruktion zu schaffen. Dennoch hat das bekannte Getriebe eine verhältnismäßig große Baulänge, weil es, wie schon erwähnt, vier Radebenen benötigt.

Der Erfindung liegt deshalb die Aufgabe zugrunde, ausgehend von dem eingangs erwähnten bekannten Stufenschaltgetriebe, die axiale Baulänge derartiger Getriebe noch weiter zu verringern. Außerdem soll dafür gesorgt werden, daß bei Bedarf eine sogenannte Zentral-Synchronisierung vorgesehen werden kann, ohne daß hierdurch wieder eine Vergrößerung der Getriebe-Baulänge erforderlich wird.

Diese Aufgabe wird bei einem Stufenschaltgetriebe gemäß dem Oberbegriff des Anspruchs 1 durch die im Kennzeichenteil angeführten Merkmale gelöst. Weiterbildungen der Erfindung sind in den Unteransprüchen gekennzeichnet.

Dadurch daß gemäß der Erfindung nur drei Zahnradgruppen erforderlich sind und daß dennoch die Anordnung der Schaltmuffen in einer einzigen Ebene beibehalten werden kann, wird eine minimale Baulänge des Getriebes in Axialrichtung erreicht. Die kurze Baulänge ermöglicht es insbesondere, diesem Getriebe (wie an sich bekannt, DE-PS-2 137 440) noch ein Planetengetriebe zur Erhöhung der Anzahl der Gänge nachzuschalten, ohne daß dadurch die Gesamtbaulänge das übliche Maß, beispielsweise für den Einbau in Kraftfahrzeuge, übersteigen würde. Ein wesentlicher Vorteil des erfindungsgemäßen Getriebes liegt somit in seiner Kombinierbarkeit mit Zusatzgetrieben zur Erweiterung des möglichen Übersetzungsbereiches.

Besonders günstig in dieser Hinsicht ist es, wenn gemäß einer speziellen Ausführungsform der Erfindung die Muffenebene zwischen die erste und zweite Radebene gelegt wird. In diesem Falle ist es günstig, das Kupplungselement, welches das lose auf einer der Nebenwelle sitzende Rückwärtsgang-Zahnrad mit dieser Nebenwelle zu kuppeln gestattet, durch das außerdem drehfest auf dieser Welle sitzende Nebenrad hindurchzuführen.

Eine weitere Verkürzung der Baulänge des Getriebes kann dadurch erzielt werden, daß nicht jede Schaltmuffe ihre eigene Synchronisiereinrichtung aufweist, sondern daß stattdessen eine sogenannte Zentral-Synchronisierung vorgesehen wird, wie sie beispielsweise aus der DE-OS-3 021 489 bekannt ist. Eine solche Zentralsynchronisierung hat einerseits eine Rutschkupplung zum Beschleunigen der antriebsseitigen Getriebeteile beim Zurückschalten und andererseits eine Bremse zum Verzögern der antriebsseitigen Getriebeteile beim Hochschalten. Eine weitere Ausgestaltung der Erfindung besteht nun darin, die zur Zentralsynchronisierung gehörende Rutschkupplung auf der zweiten Nebenwelle in der mittleren Radebene anzuordnen. Denn an dieser Stelle benötigt sie keinen zusätzlichen Platz. Die Bremse wird vorzugsweise in der Ebene der antriebsseitigen Wellenlager angeordnet, so daß auch hierfür keine Vergrößerung der Getriebe-Baulänge erforderlich ist.

Die Erfindung wird nachfolgend anhand eines in der beiliegenden Zeichnung veranschaulichten Ausführungsbeispiels im einzelnen erläutert.

Fig. 1 zeigt schematisch ein Stufenschaltgetriebe mit einem Nachschaltgetriebe.

Fig. 2 zeigt die konstruktive Ausführung des Stufenschaltgetriebes der Fig. 1.

Fig. 3a zeigt einen Teilquerschnitt entlang der Linie III - III der Fig. 2.

Fig. 3b zeigt eine Alternative zu Fig. 3a.

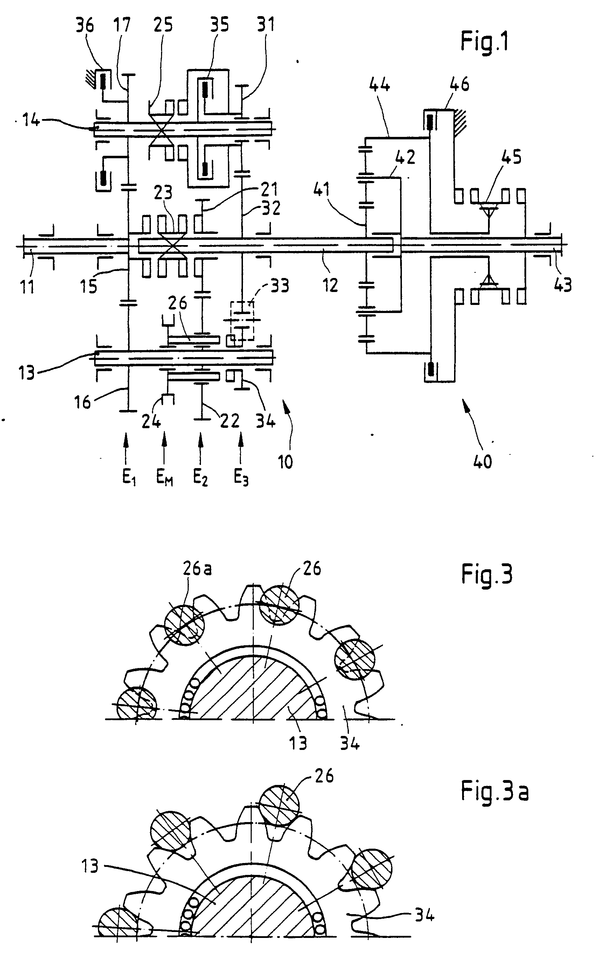

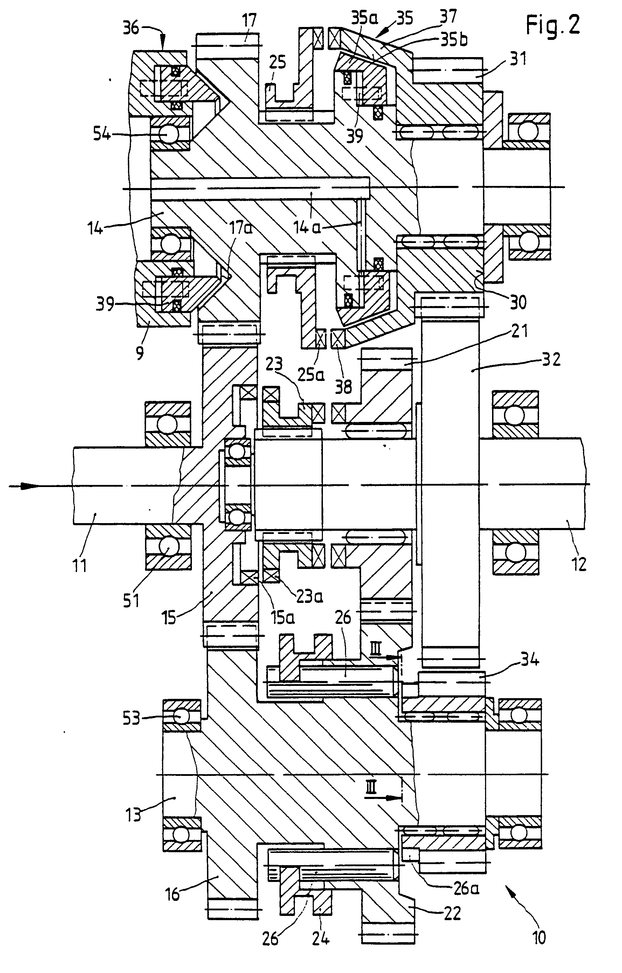

In den Fig. 1 und 2 erkennt man links eine gelagerte Antriebswelle 11, welcher üblicherweise eine hier nicht veranschaulichte Kupplung vorgeschaltet ist. Koaxial zu dieser Antriebswelle 11 verläuft eine Abtriebswelle 12, die ebenfalls in geeigneter Weise gelagert ist. Im nicht gezeigten Getriebegehäuse sind ferner eine erste Nebenwelle 13 und eine zweite Nebenwelle 14 gelagert. Auf der Antriebswelle 11 sitzt ein Zahnrad 15, welches fest mit dieser Welle verbunden ist und mit je einem Zahnrad 16 und 17 kämmt, welche ihrerseits auf den Nebenwellen 13 bzw. 14 sitzen und fest mit diesen Wellen verbunden sind. Auf der Abtriebswelle 12 sitzen ein erstes und ein zweites Abtriebszahnrad 21 bzw. 32, von denen das erste, also das Zahnrad 21, lose auf der Welle 12 sitzt, während das zweite, also das Zahnrad 32, fest mit ihr verbunden ist. Das lose sitzende erste Abtriebszahnrad 21 kämmt mit einem auf der Nebenwelle 13 festsitzenden Nebenrad 22. Das zweite Abtriebszahnrad 32 kämmt mit einem Umkehrzahnrad 33 (nur in Fig. 1 schematisch angedeutet), das seinerseits mit einem lose auf der Nebenwelle 13 gelagerten Zahnrad 34 kämmt. Über eine Schaltmuffe 24 kann dieses Zahnrad 34 fest mit der Nebenwelle 13 verbunden werden. Andererseits kämmt das zweite Abtriebszahnrad 32 mit einem Zahnrad 31, das lose auf der zweiten Nebenwelle 14 sitzt und über eine Schaltmuffe 25 mit dieser fest verbunden werden kann.

Eine dritte Schaltmuffe 23, die als Doppelschaltmuffe ausgebildet ist, gestattet es, die Abtriebswelle 12 wahlweise direkt mit der Antriebswelle 11 zu verbinden oder mit dem auf der Abtriebswelle lose sitzenden ersten Abtriebszahnrad 21, welches mit dem auf der Nebenwelle 13 sitzenden Nebenrad 22 kämmt. Das Verschieben der Schaltmuffen 23, 24, 25 erfolgt in bekannter Weise mittels nicht dargestellter Schaltgabeln.

Die Zahnräder 15, 16 und 17 liegen in einer Radebene $E_1$, die Zahnräder 21 und 22 liegen in einer zweiten Radebene $E_2$, und die Zahnräder 31, 32, 33 und 34 liegen in einer dritten Radebene $E_3$. Wie man sieht, liegen die drei Schaltmuffen 23, 24 und 25 sämtlich in ein und derselben Muffenebene $E_M$, die beim dargestellten Ausführungsbeispiel zwischen der ersten und der zweiten Radebene $E_1$ und $E_2$ liegt.

Die Schaltmuffe 24 zum Schalten des Zahnrades 34 für den Rückwärtsgang ragt mit mindestens drei Bolzen 26 durch das Nebenrad 22 hindurch, und diese Konstruktion erlaubt es, die Schaltmuffe 24 für den Rückwärtsgang auf der anderen Seite des Nebenrades 22 wie das Rückwärtsgang-Zahnrad 34 anzuordnen, so daß die Schaltmuffe 24 in derselben Ebene liegt wie die beiden anderen Schaltmuffen 23 und 25, während das Zahnrad 34 in der äußeren Radebene $E_3$ liegt. Wie die Fig. 3a und 3b zeigen, lassen sich die Bolzen 26 mittels der Schaltmuffe 24 in die Verzahnung des Zahnrades 34 schieben. Gemäß Fig. 3a sind dazu zwischen den Zähnen spezielle Ausnehmungen 26a für die Bolzen 26 vorgesehen, während die Bolzen gemäß Fig. 3b einfach in die Zahnzwischenräume geschoben werden.

Auf der in der Zeichnung gegenüberliegenden Nebenwelle 14 ist eine schlupffähige Reibungskupplung 35 angeordnet, welche im Kraftfluß zwischen der Nebenwelle 14 und dem Zahnrad 31 für den ersten Gang liegt, also parallel zu der Klauenkupplung der Schaltmuffe 25. Ist diese Klauenkupplung geöffnet und wird, bei geöffneter Eingangskupplung, die Reibungskupplung 35 beaufschlagt, dann sucht das mit dem Abtriebszahnrad 32 kämmende Zahnrad 31 die Nebenwelle 14 auf die gleiche Drehzahl zu bringen, also beim Zurückschalten die antriebsseitigen Getriebeteile - die Zahnräder 15, 16 und 17 - entsprechend zu beschleunigen, um die Synchronisierung beim Schalten, also Gleichlauf an der einzurückenden Schaltmuffe, zu bewirken. In entsprechender Weise wirkt eine auf der Nebenwelle 14 vorgesehene Reibungsbremse 36 beim Hochschalten abbremsend auf die antriebsseitigen Getriebeteile. Eine detaillierte Beschreibung der Synchronisier-Einrichtung folgt noch.

Zum Einschalten des ersten Ganges wird die Schaltmuffe 25 mit ihren Klauen betätigt, welche das Zahnrad 31 mit der Nebenwelle 14 fest verbindet, die ihrerseits über die Zahnräder 17 und 15 von der Antriebswelle 11 her angetrieben wird. Der Kraftfluß verläuft dann von der Antriebswelle 11 über die kämmenden Zahnräder 15 und 17, die Nebenwelle 14 und die kämmenden Zahnräder 31 und 32 zur Abtriebswelle 12. Die beiden anderen Schaltmuffen 23 und 24 sind in diesem Falle nicht betätigt. Zum Einschalten des zweiten Ganges wird die Schaltmuffe 23 nach links bewegt, wodurch die Abtriebswelle 12 unmittelbar mit der Antriebswelle 11 fest verbunden wird, die Kraftübertragung also ohne Drehzahlumsetzung in direktem Gang erfolgt. Hierbei sind die Schaltmuffen 24 und 25 nicht betätigt. Zur Einschaltung des dritten Ganges wird bei ebenfalls nicht betätigten Schaltmuffen 24 und 25 die Schaltmuffe 23 nach rechts verschoben, so daß das Abtriebszahnrad 21 fest mit der Abtriebswelle 12 verbunden wird und der Kraftfluß von der Antriebswelle 11 über die kämmenden Zahnräder 15, 16, die Nebenwelle 13 und die kämmenden Zahnräder 22, 21 zur Abtriebswelle 12 verläuft. Zum Einlegen des Rückwärtsganges sind die Schaltmuffen 23 und 25 nicht betätigt, und über die Schaltmuffe 24 und die durch das Nebenrad 22 hindurchragenden Bolzen 26 wird das Zahnrad 34 fest mit der Nebenwelle 13 verbunden. Der Kraftfluß verläuft dann von der Antriebswelle 11 über die kämmenden Zahnräder 15, 16, die Nebenwelle 13, das Zahnrad 34, das Umlenkzahnrad 33 und das Abtriebszahnrad 32 zur Abtriebswelle 12, deren Drehrichtung nun wegen des Umlenkzahnrades 33 entgegengesetzt zur Drehrichtung der Antriebswelle 11 ist.

Das bisher beschriebene 3+R-Gang-Getriebe kann bei Bedarf um eine oder zwei an der Abtriebseite angefügte zusätzliche Radebenen ergänzt werden, um die Zahl der Gänge zu erhöhen. Bevorzugt wird jedoch eine Anordnung, wie sie Figur 1 erkennen läßt: Mit der Abtriebswelle 12 des bisher beschriebenen Stufenschaltgetriebes 10 wird ein Nachschaltgetriebe in Form eines Planetengetriebes 40 gekoppelt, welches ein auf der Welle 12 befestigtes Sonnenrad 41, einen Planetenträger 42 und ein Hohlrad 44 aufweist und dessen an den Planetenträger gekoppelte Abtriebswelle mit 43 bezeichnet ist. Wegen der außerordentlich kurzen Baulänge des Stufenschaltgetriebes 10 eignet es sich besonders gut zur Ergänzung durch ein solches nachgeschaltetes Planetengetriebe, welches eine Verdoppelung der Zahl der Schaltstufen erlaubt, ohne daß die gesamte Baulänge dieser Getriebekombination über das von üblichen Getrieben gewohnte Maß hinausgeht. Zum Umschalten des Planetengetriebes 40 dient eine Doppelschaltmuffe 45, die mit dem Planetenträger 44 rotiert und entweder an ein feststehendes Gehäuseteil 46 oder an die Abtriebswelle 43 koppelbar ist. Im zuerst genannten Fall rotiert die Welle 43 langsamer als die Welle 12, im zweiten Fall rotieren beide Wellen 12 und 43 mit gleicher Drehzahl.

Ein weiterer Vorteil der Erfindung liegt noch darin, daß man durch Austauschen von lediglich zwei Zahnrädern (im einzelnen wie nachfolgend erläutert) die Stufung des Getriebes verändern kann, so daß man unterschiedlich gestufte Getriebe einer Baureihe mit einer maximalen Anzahl gleicher Bauteile realisieren kann und auf diese Weise eine sehr preisgünstige Baureihe erhält. Zu diesem Zweck ändert man in den beiden Kraftflußwegen für den 1. Gang (Zahnräder 17, 31, 32) und für den 3. Gang (Zahnräder 16, 22, 21) die Zähnezahl nur je eines Rades um +1 oder -1 Zahn. Bekanntlich kann man hierbei mittels Profilverschiebung den Achsabstand (und somit alle übrigen Getriebeelemente) beibehalten.

Beispielsweise kann man ausgehen von einem Grundgetriebe mit folgenden Zähnezahlen z und Übersetzungen i:

Zahnrad 15 : $z = 30$
Zahnrad 16 : $z = 27$
Zahnrad 17 : $z = 29$
Zahnrad 21 : $z = 24$
Zahnrad 22 : $z = 33$
Zahnrad 31 : $z = 23$
Zahnrad 32 : $z = 36$

Dann sind die Übersetzungen $i_1$ bzw. $i_3$ im 1. bzw. 3. Gang:
$i_1 = 29/30 \cdot 36/33 = 1{,}513$,
$i_3 = 27/30 \cdot 24/33 = 0{,}655$.

Da die Übersetzung im 2. Gang $i_2 = 1$ ist, ergeben sich die folgenden gleichmäßigen Stufensprünge:

$i_1/i_2 = 1{,}513 : 1 = 1{,}513$
$i_2/i_3 = 1 : 0{,}655 = 1{,}527$

und eine Gesamtübersetzung von $\underline{i_1/i_3 = 2{,}31}$.

Nun kann man beispielsweise durch Verringerung der Zähnezahlen der Zahnräder 21 und 31 um je 1 Zahn folgendes erreichen. Die Übersetzungen $i_1$ und $i_3$ werden nun:

$i_1 = 29/30 \cdot 36/\underline{22} = 1{,}582$,
$i_3 = 27/30 \cdot \underline{23}/33 = 0{,}627$.

Die Stufensprünge sind nach wie vor mit guter Annäherung gleichmäßig, nämlich:

$i_1/i_2 = 1{,}582 : 1 = 1{,}582$,
$i_2/i_3 = 1 : 0{,}627 = 1{,}595$,

die Gesamtübersetzung ist nun jedoch $\underline{i_1/i_3} = 1{,}582/0{,}627 = \underline{2{,}53}$.

Man kann somit das Stufenschaltgetriebe mit sehr geringem Aufwand an unterschiedliche Betriebsbedingungen, z. B. an verschiedene Fahrzeug-Gewichte oder an unterschiedliche Motor-Leistungen anpassen.

Zur Synchronisierung beim Abwärtsschalten müssen die antriebsseitigen Getriebeteile, also die Antriebswelle 11, die Zahnräder 15, 16 und 17 in der ersten Radebene $E_1$ und die zugehörigen Nebenwellen 14 und 16 auf die dem niedrigeren Gang entsprechende Drehzahl beschleunigt werden, ehe die Klauenkupplung der betreffenden Schaltmuffe eingerückt werden kann. Diese Beschleunigung erfolgt von der Abtriebswelle 12 aus über die Zahnräder 32 und 31, welche das größte Übersetzungsverhältnis zwischen Abtriebswelle 12 und Nebenwelle 14 ergeben. Zum Synchronisiervorgang wird die Reibungskupplung 35 eingeschaltet, indem beim in Fig. 2 im einzelnen dargestellten Ausführungsbeispiel Druck auf die Rückseite des Kupplungsteils 35a gegeben wird, welches mittels Bolzen 39 drehfest mit der Nebenwelle 14 verbunden ist und eine konische Oberfläche 35b hat. Diese reibt dann gegen die konische Innenfläche des topfförmigen Kupplungsteils 37, welches mit dem Zahnrad 31 fest verbunden ist, so daß dessen Bewegung auf die Nebenwelle 14 übertragen wird. Diese wird dabei auf eine durch die Abtriebswelle 12 und das Übersetzungsverhältnis zwischen den Zahnrädern 32 und 31 bestimmte Drehzahl beschleunigt. Hat die Nebenwelle 14 die gleiche Drehzahl wie das Zahnrad 31, dann können die Schaltklauen 25a der sich ebenfalls mit der Drehzahl der Nebenwelle 14 drehenden Schaltmuffe 25 in die Schaltklauen 38 am linken Ende des Kupplungsteils 37 eingerückt werden, womit der erste Gang eingeschaltet ist.

Beim Herunterschalten vom dritten Gang (Zahnräder 21, 22) auf den zweiten, direkten Gang, erfolgt die Synchronisierung für die Schaltmuffe 23 mit der Antriebswelle 11 ebenfalls über die Reibkupplung 35, welche durch Beschleunigung der Nebenwelle 14 auch die Antriebswelle 11 über die Zahnräder 15 und 17 beschleunigt, so daß die linken Klauen 23a der drehfest mit der Abtriebswelle 12 verbundenen Schaltmuffe 23 in die Gegenklauen 15a des mit der Antriebswelle 11 fest verbundenen Zahnrads 15 eingerückt werden können und die Antriebswelle 11 mit der Abtriebswelle 12 direkt verbunden ist.

Wie man in den Fig. 1 und 2 sieht, ist die Reibungskupplung 35 auf der Nebenwelle 14 in einem freien Raum in der Radebene $E_2$ der Zahnräder 21 und 22 angeordnet, welche sich gegenüber dem auf der anderen Nebenwelle 13 sitzenden Zahnrad 22 befindet. Hierdurch erfordert die Reibungskupplung 35 für die Synchronisierung keine zusätzliche axiale Baulänge für das Getriebe. Die Betätigung der Reibungskupplung 35 erfolgt im dargestellten Ausführungsbeispiel durch Druckmittel, welches durch Bohrungen 14a in der Nebenwelle 14 zugeführt wird, jedoch können im Rahmen der Erfindung auch andere Betätigungsmöglichkeiten vorgesehen werden. Im übrigen könnte anstelle der Konus-Kupplung 35 auch eine Lamellenkupplung verwendet werden.

Während beim Herunterschalten eine Beschleunigung der antriebsseitigen Getriebeteile gegenüber der Abtriebswelle 12 zur Synchronisierung erforderlich ist, müssen diese Teile andererseits beim Heraufschalten gegenüber der Abtriebswelle 12 abgebremst werden. Hierzu dient eine schaltbare Reibungsbremse 36, welche die Nebenwelle 14 abbremsen kann. Eine konische Fläche 17a des fest auf der Nebenwelle 14 sitzenden Zahnrades 17 arbeitet mit einer konischen Gegenfläche eines Bremsringes 39 zusammen, der in einem als Ringzylinder ausgebildeten Teil 9 des Getriebegehäuse-Deckels gelagert ist und ebenfalls durch Druckmittelbetätigung gegen die konische Fläche 17a gedrückt werden kann. Die Anordnung der in das Zahnrad 17 hineinverlaufenden konischen Fläche 17a und die Lagerung des Bremsringes 39 mit seinem Antrieb in einem Gehäusedeckel des Getriebes führt ebenfalls zu einer raumsparenden Anordnung, welche praktisch keine zusätzliche axiale Länge für das Getriebe erfordert, da der Bremsring 39 im Bereich der gleichen Ebene liegt, in dem auch die antriebsseitigen Lager 51, 53 und 54 für die Wellen 11, 13 und 14 angeordnet sind. Bei der dargestellten Ausführungsform sieht man rechts vom Zahnrad 31 noch eine weitere Reibfläche 30, gegen die das Zahnrad 31 anläuft und somit ein zusätzliches Reibmoment erhält, was die Einsparung eines Achslagers ermöglicht.

## Patentansprüche

1. Stufenschaltgetriebe für drei Vorwärtsgänge und einen Rückwärtsgang, mit den folgenden Merkmalen:

a) eine Antriebswelle (11) und eine Abtriebswelle (12) liegen koaxial zu einer zentralen Getriebeachse und sind zum Schalten eines direkten Ganges mittels einer Schaltmuffe (23) unmittelbar aneinander koppelbar;

b) auf der Antriebswelle (11) und der Abtriebswelle (12) sowie auf zwei neben der Getriebeachse liegenden Nebenwellen (13, 14) befinden sich mehrere Gruppen miteinander kämmender Zahnräder (15, 16, 17; 21, 22; 31 bis 34);

c) von einer ersten Zahnradgruppe, die drei miteinander kämmende Zahnräder (15, 16, 17) aufweist und die in einer ersten Radebene ($E_1$) angeordnet ist, ist je eines der Zahnräder starr mit der Antriebswelle (11) und den beiden Nebenwellen (13, 14) verbunden;

d) ein erstes Abtriebszahnrad (21) ist lose auf der Abtriebswelle (12) gelagert und mittels einer Schaltmuffe (23) mit ihr koppelbar und kämmt mit einem der ersten Nebenwelle (13) zugeordneten Nebenrad (22);

e) ein Zahnrad (31) für den ersten Gang ist lose auf der zweiten Nebenwelle (14) gelagert und mittels einer Schaltmuffe (25) mit dieser koppelbar und kämmt mit einem zweiten Abtriebszahnrad (32), das der Abtriebswelle (12) zugeordnet ist;

gekennzeichnet durch die folgenden weiteren Merkmale:

f) die Zahnräder (15 - 17; 21, 22; 31 - 34) bilden nur drei Zahnradgruppen, die in drei Radebenen ($E_1$, $E_2$, $E_3$) angeordnet sind;

g) der direkte Gang (Schaltmuffe 23) bildet den zweiten Gang;

h) das genannte erste Abtriebszahnrad (21) ist zur Bildung des dritten Ganges bestimmt und liegt in der zweiten, mittleren Radebene ($E_2$), wobei das mit ihm kämmende Nebenrad (22) starr mit der ersten Nebenwelle (13) verbunden ist;

i) die dritte Radebene ($E_3$) ist zur Bildung des ersten Ganges und des Rückwärtsganges bestimmt und weist vier Zahnräder (31 - 34) auf, von denen das genannte zweite Abtriebszahnrad starr mit der Abtriebswelle (12) verbunden ist und mit einem Umkehrrad (33) kämmt, das seinerseits mit einem neben dem Nebenrad (22) des dritten Ganges lose auf der ersten Nebenwelle (13) gelagerten Rückwärtsgang-Zahnrad (34) kämmt, das mittels einer Schaltmuffe (24) mit dem Nebenrad (22) des dritten Ganges koppelbar ist.

2. Getriebe nach Anspruch 1 dadurch gekennzeichnet, daß die Schaltmuffen (23 - 25) in einer Muffenebene ($E_M$) zwischen der ersten und der zweiten Radebene ($E_1$, $E_2$) liegen.

3. Getriebe nach Anspruch 2, dadurch gekennzeichnet, daß die Schaltmuffe (24) für den Rückwärtsgang mindestens ein parallel zur Schaltmuffenachse (Nebenwelle 13) verlaufendes Kuppelelement (Bolzen 26) aufweist, welches durch Ausnehmungen (26a) im Nebenrad (22) hindurchragend in Ausnehmungen des Rückwärtsgang-Zahnrades (34) einrückbar ist (Fig. 3 und 3a).

4. Getriebe nach Anspruch 3, dadurch gekennzeichnet, daß die Ausnehmungen des Rückwärtsgang-Zahnrades (34) dessen Zahnlücken sind (Fig. 3a).

5. Getriebe nach einem der vorstehenden Ansprüche, dadurch gekennzeichnet, daß die Schaltmuffen für die Kupplung der Antriebswelle (11) bzw. des ersten Abtriebszahnrades (21) mit der Abtriebswelle (12) in Form einer gemeinsamen Doppelschaltmuffe (23) ausgebildet sind.

6. Getriebe mit einer Reibungssynchronisier-Einrichtung nach einem der vorstehenden Ansprüche, dadurch gekennzeichnet, daß auf der zweiten Nebenwelle (14) in der mittleren Rade-

bene ($E_2$) eine schlupffähige Reibungskupplung (35) im Kraftfluß zwischen dem mit dem zweiten Abtriebszahnrad (32) kämmenden Zahnrad (31) des ersten Ganges und der zweiten Nebenwelle (14) zur Beschleunigung der antriebsseitigen Getriebeteile (11, 13 - 17) beim Gangwechsel angeordnet ist und daß andererseits zum Abbremsen dieser Getriebeteile (11, 13 bis 17) eine Reibungsbremse (36) vorgesehen ist.

7. Getriebe nach Anspruch 6, dadurch gekennzeichnet, daß die Reibungsbremse (36) zusammen mit den antriebsseitigen Lagern der Wellen (11, 13, 14) im wesentlichen in ein und derselben Ebene liegt.

8. Getriebe nach Anspruch 6 oder 7, dadurch gekennzeichnet, daß eine Reibfläche der Reibungskupplung (35) an einem mit dem kleineren Zahnrad (31) des Zahnradpaares (31, 32) der größten Übersetzung (1. Gang) fest verbundenen Kupplungsteil (37) angebracht ist und die andere Reibfläche (35b) drehfest mit der einen Nebenwelle (14) verbunden ist.

9. Getriebe nach Anspruch 8, dadurch gekennzeichnet, daß der Kupplungsteil (37) an seiner dem kleineren Zahnrad (31) abgewandten Seite als Eingriffsteil (Klauen 38) für eine das lose auf der Nebenwelle (14) sitzende kleinere Zahnrad (31) mit dieser Nebenwelle kuppelnden Schaltmuffe (25) ausgebildet ist.

10. Getriebe nach Anspruch 9, dadurch gekennzeichnet, daß das Kupplungsteil (37) zwischen seiner Befestigung am Zahnrad (31) und dem Eingriffsteil (Klauen 38) eine konische Innenfläche aufweist, gegen die eine die andere Reibfläche (35b) bildende konische Außenfläche des zweiten Kupplungsteils (37) drückbar ist, das axial verschiebbar auf der Nebenwelle (14) sitzt und drehfest mit dieser verbunden ist.

11. Getriebe nach einem der Ansprüche 7 bis 10, dadurch gekennzeichnet, daß mit einem zur antriebsseitigen Radebene ($E_1$) gehörenden Zahnrad (17) eine Reibfläche (17a) der schaltbaren Reibungsbremse (36) verbunden ist, deren andere Reibfläche relativ zum Getriebegehäuse (9) drehfest angeordnet ist.

12. Getriebe nach Anspruch 11, dadurch gekennzeichnet, daß die eine Reibfläche (17a) als konische Seitenfläche des genannten Zahnrades (17) ausgebildet ist.

## Claims

1. A change-speed gearbox adapted to provide three forward gear ratios and one reverse ratio, having the following features:

(a) an input drive shaft (11) and an output drive shaft (12) are arranged in coaxial relationship to a central gearbox axis and are able to be directly coupled with each other for producing a unity ratio using a clutch (23);

(b) on the input drive shaft (11) and on the output drive shaft (12) and on two counter shafts (13 and 14) adjacent to the gearbox axis there are groups of meshing gear wheels (15, 16, 17; 21, 22; 31 through 34);

(c) of a first gear wheel group including three meshing gear wheels (15, 16 and 17) and arranged in a first gear wheel plane ($E_1$), one respective one of the gear wheels is locked in rotation with the input drive shaft (11) and the two counter shafts (13 and 14);

(d) a first output gear wheel (21) is bearinged on the output drive shaft (12), is able to be coupled with it by a clutch (23) and meshes with a counter gear wheel associated with the first counter shaft (13); and

(e) a gear wheel (31) for the first bear ratio is bearinged on the second counter shaft (14) and is able to be coupled with the same by means of a clutch (25) and meshes with a second output drive gear wheel (32) associated with the output drive shaft (12)

characterized by the following further features:

(f) the gear wheels (15 through 17; 21, 22; 31 - 34) form only three gear wheel groups which are arranged in three gear wheel planes ($E_1$, $E_2$ and $E_3$);

(g) the gear ratio of unity (by way of the clutch 23) is the second gear ratio;

(h) the said first output gear wheel (21) is intended for use in the third gear ratio and is in the second, central gear wheel plane ($E_2$), the counter gear wheel (22) meshing with it being locked in rotation with the first counter shaft (13);

(i) the third bear wheel plane ($E_3$) is intended for forming the first gear ratio and the reverse ratio and has four gear wheels (31 through 34), of which the said second output bear wheel is locked in rotation with the output drive shaft (12) and meshes with a reversing gear wheel (33), which for its part meshes with a reverse gear wheel (34) arranged aside the counter gear wheel (22) of the third gear ratio on the first counter shaft (13), such gear wheel (34) being able to be coupled by means of a clutch (24) with the counter gear wheel (22) of the third gear ratio,

2. The gearbox as claimed in claim 1 characterized in that the clutches (23, 24, 25) are arranged in a clutch plane ($E_M$) between the first and the second gear wheel planes ($E_1$ and $E_2$).

3. The gearbox as claimed in claim 2 characterized in that the clutch (24) for reverse has at least one clutch element (pins 26) extending in parallelism to the axis of the clutch (counter shaft 13), said coupling element being able to be moved into engagement through recesses (26a) in the counter gear wheel (22) into recesses in the reverse gear ratio gear wheel (34, figures 3 and 3a).

4. The gearbox as claimed in claim characterized in that the recesses in the reverse gear ratio gear wheel (14) are intertooth gaps therein (figure 3a).

5. The gearbox as claimed in any one preceding claim characterized in that the clutches for the coupling of the input drive shaft (11) and, respectively, of the first output gear wheel (21) with the output drive shaft (12) are in the form of a common two-way clutch (23).

6. The gearbox having a frictional synchronizing means as claimed in any one of the preceding claims characterized in that there is a slipping frictional clutch (35) on the second counter shaft (14) in the central gear wheel plane ($E_2$) in the power train between the gear wheel (31) meshing with the second output gear wheel (32), of the first gear ratio and the second counter shaft (14) for accelerating the gearbox parts (11 and 13 to 17) on changing gear, and for braking these gearbox parts (11 and 13 to 17) there is a frictional brake (36).

7. The gearbox as claimed in claim 6 characterized in that the frictional brake (36) together with the drive input side bearings of the shafts (11, 13 and 14) are generally in one and the same plane.

8. The gearbox as claimed in claim 6 or claim 7 characterized by a frictional surface of the friction clutch (35) on a clutch part (37) locked to the smaller bear wheel (31) of the gear wheel pair (31 and 32) with the maximum ratio (first gear) and the other frictional surface (35b) is locked in rotation of the one counter shaft (14).

9. The gearbox as claimed in claim 8 characterized in that on its side facing away from the smaller gear wheel (31) the clutch part (37) is in the form of an engaging part (dog clutch teeth 38) for a smaller gear wheel (31) bearinged on the counter shaft (14), such teeth forming part of a clutch (25) for coupling with this counter shaft.

10. The gearbox as claimed in claim 9 characterized in that the clutch part (37) has a conical inner surface between its position of attachment with the gear wheel (31) and the engaging part (teeth 38), and a conical outer surface, forming the outer frictional surface (35b), of the second clutch (37) may have the inner conical surface pressed against it, said clutch part (37) being able to slide on the counter shaft (14) and being locked in rotation therewith.

11. The gearbox as claimed in any one of the claims 7 through 10 characterized in that a frictional surface (17a) of the friction brake (36) is connected with bear wheel (17) belonging to the gear wheel plane ($E_1$) on the input side, and the other surface of the brake is locked in rotation with the housing of the gearbox (9).

12. The gearbox as claimed in claim 11 characterized in that the one frictional surface (17a) is in the form of a conical side surface of the said gear wheel (17).

## Revendications

1. Boîte de vitesses pour trois vitesses avant et une vitesse arrière, ayant les caractéristiques suivantes:

a) un arbre de commande (11) et un arbre de renvoi (12) sont disposés coaxialement par rapport à un axe central de la boîte et peuvent être accouplés directement pour passer une vitesse directe au moyen d'un manchon d'accouplement (23);

b) sur l'arbre de commande (11) et sur l'arbre de renvoi (12), ainsi que sur deux arbres secondaires (13, 14) situés à côté de l'axe de la boîte, se trouvent plusieurs groupes de pins engrenant les uns avec les autres (15, 16, 17; 21, 22; 31 à 34);

c) sur un premier groupe de pignons, composé de trois pignons engrenant les uns avec les autres (15, 16, 17) et disposés dans un premier plan d'alignement des pins ($E_1$), chacun des pins est solidaire de l'arbre de commande (11) et des deux arbres secondaires (13, 14);

d) un premier pin de renvoi (21) est monté librement sur l'arbre de renvoi (12) et peut s'accoupler avec lui au moyen d'un manchon d'accouplement (23), et engrène avec un pignon secondaire (22) monté sur le premier arbre secondaire (13);

e) un pin (31) pour la première vitesse est monté librement sur le deuxième arbre secondaire (14) et peut être accouplé avec celui-ci au moyen d'un manchon d'accouplement (25), et engrène avec un deuxième pignon de renvoi (32), monté sur l'arbre de renvoi (12);

caractérisé par les autres caractéristiques suivantes:

f) les pins (15 à 17; 21, 22; 31 à 34) forment seulement trois groupes de pignons disposés dans trois plans d'alignement des pignons ($E_1$, $E_2$, $E_3$);

g) la prise directe (manchon d'accouplement 23) forme la deuxième vitesse;

h) le premier pin de renvoi indiqué (21) est destiné à former la troisième vitesse et se trouve dans le deuxième plan central d'alignement des pignons ($E_2$), et le pignon secondaire (22) qui engrène avec lui est solidaire du premier arbre secondaire (13);

i) le troisième plan d'alignement des pignons ($E_3$) est destiné à former la première vitesse et la marche arrière et comporte quatre pins (31 à 34), dont le deuxième pignon de renvoi cité est solidaire de l'arbre de renvoi (12) et engrène avec un pin d'inversion de marche (33) qui, de son côté, engrène avec un pin de marche arrière (34), monté à côté du pignon secondaire (22) de la troisième vitesse, librement sur le premier arbre secondaire (13), le pin de marche arrière pouvant être accouplé au moyen d'un manchon d'accouplement (24) avec le pin secondaire (22) de la troisième vitesse.

2. Boîte de vitesses suivant revendication 1, caractérisée en ce que les manchons d'accouplement (23 - 25) sont disposés dans un plan d'alignement des manchons ($E_M$) entre le premier plan et le deuxième plan d'alignement des manchons ($E_1$, $E_2$).

3. Boîte de vitesses suivant revendication 2, caractérisée en ce que le manchon d'accouplement (24) pour la marche arrière présente au moins un élément d'accouplement (axe 26) parallèle à l'axe du manchon d'accouplement (arbre secondaire 13), qui peut être embrayé par des évidements (26a) dans le pignon secondaire (22) dépassant dans des évidements du pignon de marche arrière (34).

4. Boîte de vitesses suivant revendication 3, caractérisée en ce que les évidements du pignon de marche arrière (34) sont constitués par les creux de denture.

5. Pignon suivant l'une des revendications ci-dessus, caractérisé en ce que les manchons d'accouplement de l'arbre de commande (11) ou du premier pignon de renvoi (21), avec l'arbre de renvoi (12), sont constitués sous forme d'un manchon d'accouplement double commun (23).

6. Boîte de vitesses avec un dispositif de synchronisation à friction suivant l'une des revendications ci-dessus, caractérisée en ce que l'on a prévu sur le deuxième arbre secondaire (14), dans le plan central d'alignement des pignons ($E_2$), un embrayage à friction susceptible de glissement (35) sur la chaîne cinématique entre le pignon (31) de la première vitesse, engrenant avec le deuxième pignon de renvoi (32), et le deuxième arbre secondaire (14), pour l'accélération des éléments de la boîte (11, 13 à 17) situés côté commande, lors du changement de vitesse, et que, d'autre part, on a prévu pour le freinage de ces éléments de la boîte (11, 13 à 17) un frein à friction (36).

7. Boîte de vitesses suivant revendication 6, caractérisée en ce que le frein à friction (36) se trouve avec les paliers côté commande des arbres (11, 13, 14) essentiellement dans un seul et même plan.

8. Boîte de vitesses suivant revendication 6 ou 7, caractérisée en ce qu'on a prévu une face de friction sur l'embrayage à friction (35) sur un élément d'accouplement (37) solidaire du petit pignon (31) de la paire d'engrenages (31, 32) du plus grand rapport (1re vitesse), tandis que l'autre face de friction (35b) est solidaire en rotation d'un arbre secondaire (14).

9. Boîte de vitesses suivant revendication 8, caractérisée en ce que l'élément d'accouplement (37) comporte sur sa face opposée au petit pignon (31) un élément d'embrayage (griffe 38) pour le manchon d'accouplement (25) accouplant le petit pignon (31) monté librement sur l'arbre secondaire (14) avec cet arbre secondaire.

10. Boîte de vitesses suivant revendication 9, caractérisée en ce que l'élément d'accouplement (37) présente entre sa fixation sur le pignon (31) et l'élément d'embrayage (griffe 38) une surface intérieure conique, contre laquelle la surface extérieure conique du deuxième élément d'accouplement (37), formant l'autre face de friction (35b), peut venir s'appuyer, et peut se déplacer axialement sur l'arbre secondaire (14) et est solidaire de celui-ci en rotation.

11. Boîte de vitesses suivant l'une des revendications 7 à 10, caractérisée en ce qu'une surface de frottement (17a) du frein à friction embrayable (36) est solidaire d'un pignon (17) se trouvant dans le plan des pignons côté commande ($E_1$), frein dont l'autre surface de friction est solidaire en rotation du boîtier (9).

12. Boîte de vitesses suivant revendication 11, caractérisée en ce qu'une surface de friction (17a) a la forme d'une face latérale conique du pignon (17).

Fig.1

36  17  25  35  31

14

23  21
32

41  44  42  46  45

11  15  12  43

26  33

13

16  24  22  34

10  40

E₁  Eₘ  E₂  E₃

Fig.3

26a  26

13  34

Fig.3a

26

13

34

Fig. 2